# EUROPEAN PATENT SPECIFICATION

(11) **EP 3 754 314 B1**
(45) Date of publication and mention of the grant of the patent: **27.12.2023**
(21) Application number: 19382500.7
(22) Date of filing: 17.06.2019
(51) Int. Cl.: G01K 1/14, H01M 10/44, H01M 10/48, H02J 7/00, H01R 13/66, H01M 50/569

(54) **BATTERY CABLE**
BATTERIEKABEL
CÂBLE DE BATTERIE

(43) Date of publication of application: 23.12.2020
(73) Proprietor: UTC Fire & Security EMEA BVBA, 1831 Diegem (BE)
(72) Inventor: CERECEDA LORENTE, Fabian, 08923 Barcelona (ES)
(74) Representative: Dehns

(56) References cited:
- EP-A1- 3 977 539
- US-A1- 2010 176 768
- US-A1- 2013 169 236
- US-A1- 2018 159 280

## Description

### FIELD

The present disclosure relates generally to rechargeable batteries and more specifically to batteries including temperature sensors for monitoring the temperature of the battery whilst it is being charged.

### BACKGROUND

It is desirable to charge batteries at or within a recommended temperature or temperature range that may be specific to the particular battery. This temperature or temperature range may be provided by the manufacturer of the battery. The recommendation may be determined based on various factors, such as the chemicals within the battery. Charging at or within the recommended conditions will maximise the life of the battery. For example, in the case of lead-acid batteries, too low a temperature during charging may cause an under-charge of the battery and, with time, may cause battery sulpherisation and the reduction of the capacity and life of the battery. On the other hand, too high a temperature during charging may cause an over-charge, which may cause heat leaks on the battery, loss of current capacity, and potentially an explosion of the battery.

The temperature of the battery will vary with the charging voltage applied thereto and, thus, if the temperature becomes undesirable during charging, the charging voltage can be adjusted so as to optimise the battery temperature during charging, i.e. by decreasing the charging voltage if the temperature increases , or increasing the charging voltage if the temperature decreases, i.e. to return the temperature to the desired range.

The battery may be connected to a power supply manager (PSM), via a cable, for controlling the charging voltage applied to the battery. The temperature of the battery during charging may be inferred from the temperature detected by a thermistor located on a control board of the PSM. The PSM may then control the charging voltage applied to the battery based on the temperature that is detected. However, the temperature value detected by such a configuration is relatively sensitive to the positioning of the thermistor on the control board. Due to variability in the positioning of thermistors in different charging apparatus, different charging apparatus may detect a given battery temperature as being different. Such different charging apparatus may therefore charge batteries using different charging voltages, even if the true temperatures of those batteries are the same. US 2013/0169236 A1 and US2010/0176768 A1 disclose a battery assembly comprising a power supply manager which controls the charge current according to a temperature measurement; temperature sensors are located at the terminals of the battery. US 2018/0159280 A1 discloses a charging connector comprising a terminal on which a temperature sensor is mounted.

### SUMMARY

This disclosure provides a battery assembly comprises a battery, a power supply manager (PSM) for controlling charging of the battery, and a battery cable comprising first and second wires having respective first terminals for connection to respective terminals of the battery and respective second terminals for connection to the PSM, the battery cable having a temperature sensor located in or on one of the respective first terminals, wherein the PSM is connected to the temperature sensor and configured to control the charging of the battery based on the temperature sensed by the temperature sensor.

The embodiments allow the temperature sensor to be located relatively close to the cells of the battery to which the battery cable is connected. This may provide a more accurate or consistent temperature measurement.

The PSM may be configured to control the voltage at which the battery is charged based on the temperature sensed by the temperature sensor.

The PSM may be configured to increase the voltage at which the battery is charged if the temperature sensed by the temperature sensor is below a predetermined threshold.

The PSM may be configured to decrease the voltage at which the battery is charged if the temperature sensed by the temperature sensor is above a predetermined threshold.

The amount the voltage is increased or decreased by may be dependent on (e.g. proportional to) the temperature sensed, e.g. how far it is above or below the respective predetermined threshold.

The one of the respective first terminals may be connected to a negative terminal of the battery.

The electrode of the one of the respective first terminals of the cable (i.e. the one which the temperature sensor is located in or on) may be larger than the electrode of other first terminal (at the same end of the cable), which may provide for a better thermal connection with the thermal sensor. This may provide a more accurate temperature measurement.

The one of the respective first terminals may be a standard quick disconnect (SQD) terminal. The temperature sensor may be located within a curled portion of the SQD terminal. The SQD terminal may be a Faston terminal.

The temperature sensor may be a thermistor. The thermistor may be a negative temperature coefficient (NTC) thermistor. Alternatively, the thermistor may be a positive temperature coefficient (PTC) thermistor.

Alternatively, the temperature sensor may be a diode temperature sensor or any other type of temperature sensor.

The battery assembly may include a thermistor assembly, wherein the thermistor assembly includes the thermistor and thermistor wires extending from and in electrical communication with the thermistor. The thermistor wires may extend to a microprocessor of the PSM. Alternatively, the microprocessor may be connected to the PSM. The microprocessor may control the PSM using a suitable firmware algorithm.

The battery assembly may further include a power supply connected to the PSM, wherein the PSM converts power from the power supply to a voltage at which the battery is charged.

This disclosure also provides a method of charging a battery comprising: providing a battery assembly as described herein; connecting a power supply to the PSM, and connecting the PSM to the battery with the battery cable, wherein the PSM controls a voltage at which the battery is charged based on the temperature sensed by the temperature sensor. The method may include using a battery assembly having any of the features discussed above.

This disclosure also provides a battery cable for charging a battery, comprises first and second wires having respective first terminals for connection to respective terminals of a battery and respective second terminals for receiving power from a power source, wherein a temperature sensor is located in or on one of the respective first terminals.

The temperature sensor may be a thermistor. The temperature sensor may be an NTC thermistor or a PTC thermistor.

The battery cable may include a thermistor assembly, wherein the thermistor assembly includes the thermistor and first and second wires extending form the thermistor to a connector block.

The one of the respective terminals may be a standard quick disconnect (SQD) terminal.

### BRIEF DESCRIPTION OF DRAWINGS

Various embodiments will now be described, by way of example only, and with reference to the accompanying drawings in which:
Figure 1 shows a battery cable for connection between a battery and a PSM; and
Figure 2 shows an enlarged view of a terminal of the battery cable for being connected to a battery.

### DETAILED DESCRIPTION

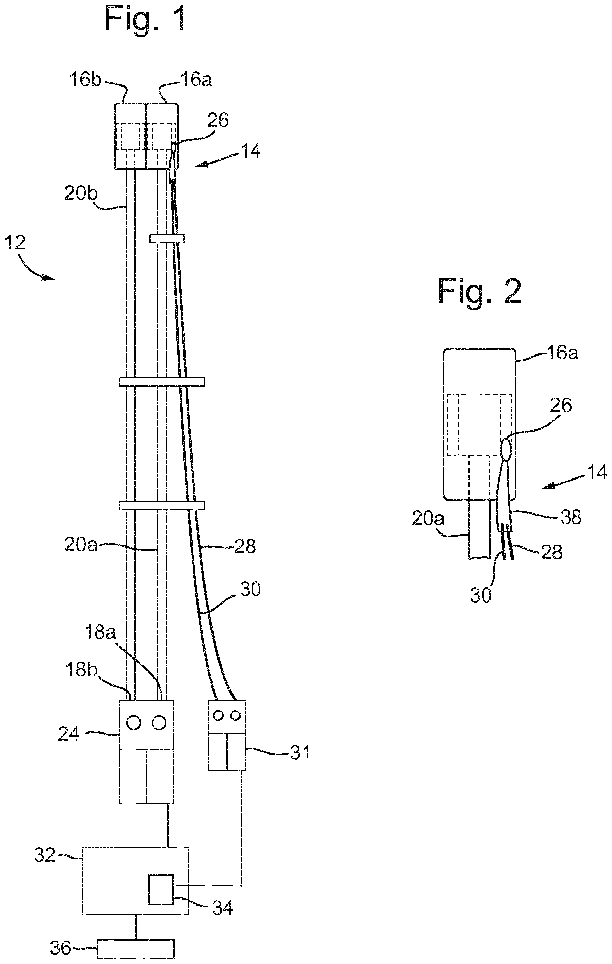

Figure 1 shows a battery cable 12 for connecting a battery (not shown) to a power supply manager (PSM) 32. The battery cable 12 includes first and second wires 20a, 20b. Each wire 20a,20b has respective first terminals 16a,b and second terminals 18a,b. The first terminals 16a,b are for connection to a battery, and the second terminals 18a,b are for connection to the PSM 32. The second terminals 18a,b may be located in a connector, such as a battery terminal block plug 24, for connection to the PSM 32. The battery cable further comprises a temperature sensor 26 such as a thermistor, e.g. a negative temperature coefficient (NTC) thermistor.

The thermistor 26 may be part of a thermistor assembly 14 that comprises thermistor wires 28, 30 extending from the thermistor 26. In Figure 1, the thermistor 26 is located in and attached to the first terminal 16a of the first battery wire 20a, i.e. in the wire terminal to be connected to the negative terminal of the battery. However, alternatively the thermistor 26 may instead be located in and attached to the first terminal 16b of the second battery wire 20b. The wire terminal to be connected to the negative terminal of the battery tends to be larger than that connected to the positive terminal of the battery, providing a greater surface area for attachment of the thermistor 26 and for thermal conduction. The thermistor wires 28,30 extend from the thermistor element 26 to a connector, such as a block plug 31, for connection to a microprocessor 34. The microprocessor 34 determines the temperature sensed by the thermistor 26 at the first terminal 16a, and feeds this temperature measurement to the PSM 32. The microprocessor 34 may be part of, or connected to, the PSM 32. During charging of the battery, a power source 36 (such as mains electricity) is connected to the PSM 32. The PSM 32 can then control the voltage (from the power source 36) at which the battery is charged based on the temperature sensed by the thermistor 26 and fed to the PSM by the microprocessor 34. The microprocessor 34 can calculate an adjustment to the charge voltage based on the temperature detected by the thermistor 26, should said temperature of the battery be outside of a desired or recommended range, the desired or recommended range having been determined (e.g. by the manufacturer) for the battery being charged. The PSM 32 can then implement the adjustment. For example, if the thermistor 26 detects that the battery temperature is below a predetermined threshold then the PSM 32 may increase the charging voltage supplied to the battery and/or if the thermistor 26 detects that the battery temperature is above a predetermined threshold then the PSM 32 may decrease the charging voltage supplied to the battery. The amount by which the charging voltage is increased and/or decreased may be dependent (e.g. proportional) to the temperature sensed.

The thermistor 26 may be a negative temperature coefficient thermistor (NTC) or a positive temperature coefficient thermistor (PCT), and may be formed from any suitable material, such as a semiconductor material. Alternatively, the temperature sensor may be any suitable type of temperature sensor, such as a diode temperature sensor, that is capable of being located in the above described location.

The first terminal 16a of the first wire 20a may be a Standard Quick-Disconnect (SQD) terminal (such as a Faston terminal), and the thermistor element 26 may be located inside one of the curled portions of the SQD terminal. The curled portion of a SQD terminal provides a good surface for connection. Alternatively, the first terminal 16a of the first wire 20a may be any other type of connector or terminal. As the terminal 18 of the wire 20 is plugged into the terminal of the battery, this configuration allows the thermistor 26 to be in close thermal contact with the battery whilst the battery is being charged via the cable 12 connected therewith.

Locating the thermistor (or any other temperature sensor) in a terminal of a wire at the end of the cable that is connected to a battery terminal provides a reliable temperature measurement of the battery during charging. For example, it allows a manufacturer to reliably and consistently place the temperature sensor in the same location within battery cables, and at a location where the temperature measured will not be affected by external factors (e.g. the thermal conduction through other components, such as wires, cables or casings, or the temperature external to the battery and casing). The embodiments therefore allow a more accurate determination of the battery temperature, and different battery cables provide a more consistent/similar temperature measurement for a given battery temperature. Also, as the wire terminal is located in contact with the battery terminal during charging, heat from the battery is conducted to the wire terminal relatively effectively and so the wire terminal has a substantially uniform temperature across its surface. As such, even if thermistors are placed in a slightly different positions within the wire terminals of different battery cables, the thermistors will still detect a given battery temperature as being substantially the same.

The battery may include any number of cells. The battery may be a lead-acid battery, or any other suitable battery.

Figure 2 shows an enlarged view of the negative terminal 18 of the battery cable 12 and the thermistor 26 located therein, and in direct contact therewith. The thermistor wires 28,30 may be covered with a shrink cover 38 in the region within and proximate to the negative terminal 18. The NTC thermistor may be any suitable NTC thermistor.

## Claims

1. A battery assembly comprising:
a battery;
a power supply manager (PSM) (32) for controlling charging of the battery; and
a battery cable (12) comprising first and second wires (20a, 20b) having respective first terminals (16a, 16b) for connection to respective terminals of the battery and respective second terminals (18a, 18b) for connection to the PSM (32), the battery cable (12) having a temperature sensor (26) located in or on one of the respective first terminals (16a, 16b);
wherein the PSM (32) is connected to the temperature sensor (26) and configured to control the charging of the battery based on the temperature sensed by the temperature sensor (26).

2. The battery assembly of claim 1, wherein the PSM is configured to control the voltage at which the battery is charged based on the temperature sensed by the temperature sensor.

3. The battery assembly of claim 2, wherein the PSM is configured to increase the voltage at which the battery is charged if the temperature sensed by the temperature sensor is below a predetermined threshold.

4. The battery assembly of claim 2 or 3, wherein the PSM is configured to decrease the voltage at which the battery is charged if the temperature sensed by the temperature sensor is above a predetermined threshold.

5. The battery assembly of any preceding claim, wherein said one of the respective first terminals is connected to a negative terminal of the battery.

6. The battery assembly of any preceding claim, wherein the one of the respective first terminals is a standard quick disconnect (SQD) terminal.

7. The battery assembly of claim 6, wherein the temperature sensor is located within a curled portion of the SQD terminal.

8. The battery assembly of any preceding claim, wherein the temperature sensor is a thermistor.

9. The battery assembly of claim 8, wherein the thermistor is an NTC thermistor.

10. The battery assembly of any preceding claim, further comprising a power supply connected to the PSM, wherein the PSM converts a voltage and current of the power supply to a voltage and current at which the battery is charged.

11. A method of charging a battery comprising:
providing a battery assembly as claimed in any preceding claim;
connecting a power supply to the PSM (32); and
connecting the PSM (32) to the battery with the battery cable (12);
wherein the PSM (32) controls a voltage at which the battery is charged based on the temperature sensed by the temperature sensor. sensor (26).

12. A battery cable (12) for charging a battery, comprising first and second wires (20a, 20b) having respective first terminals (16a, 16b) for connection to respective terminals of a battery and respective second terminals (18a, 18b) for receiving power from a power source, **characterised in that** a temperature sensor (26) is located in or on one of the respective first terminals (16a, 16b).

13. The battery cable of claim 12, wherein the temperature sensor is a thermistor.

14. The battery cable of claim 13, wherein the battery cable includes a thermistor assembly that includes the thermistor and first and second wires extending form the thermistor to a connector block.

15. The battery cable of claim 12, 13, or 14, wherein the one of the respective terminals is a standard quick disconnect (SQD) terminal.

## Patentansprüche

1. Batteriebaugruppe, umfassend:
eine Batterie;
einen Stromversorgungsverwalter (power supply manager, PSM) (32) zum Steuern des Ladens der Batterie; und
ein Batteriekabel (12), umfassend einen ersten und einen zweiten Draht (20a, 20b), die jeweilige erste Anschlüsse (16a, 16b) zur Verbindung mit jeweiligen Anschlüssen der Batterie und jeweilige zweite Anschlüsse (18a, 18b) zur Verbindung mit dem PSM (32) aufweisen, wobei das Batteriekabel (12) einen Temperatursensor (26) aufweist, der sich in oder an einem der jeweiligen ersten Anschlüsse (16a, 16b) befindet;
wobei der PSM (32) mit dem Temperatursensor (26) verbunden ist und konfiguriert ist, um das Laden der Batterie basierend auf der durch den Temperatursensor (26) erfassten Temperatur zu steuern.

2. Batteriebaugruppe nach Anspruch 1, wobei der PSM konfiguriert ist, um die Spannung, mit der die Batterie geladen wird, basierend auf der durch den Temperatursensor erfassten Temperatur zu steuern.

3. Batteriebaugruppe nach Anspruch 2, wobei der PSM konfiguriert ist, um die Spannung, mit der die Batterie geladen wird, zu erhöhen, wenn die durch den Temperatursensor erfasste Temperatur unter einem vorbestimmten Schwellenwert liegt.

4. Batteriebaugruppe nach Anspruch 2 oder 3, wobei der PSM konfiguriert ist, um die Spannung, mit der die Batterie geladen wird, zu verringern, wenn die durch den Temperatursensor erfasste Temperatur über einem vorbestimmten Schwellenwert liegt.

5. Batteriebaugruppe nach einem der vorhergehenden Ansprüche, wobei der eine der jeweiligen ersten Anschlüsse mit einem Minuspol der Batterie verbunden ist.

6. Batteriebaugruppe nach einem der vorhergehenden Ansprüche, wobei der eine der jeweiligen ersten Anschlüsse ein Standard-Schnelltrenn(standard quick disconnect, SQD)-Anschluss ist.

7. Batteriebaugruppe nach Anspruch 6, wobei sich der Temperatursensor innerhalb eines gewellten Abschnitts des SQD-Anschlusses befindet.

8. Batteriebaugruppe nach einem der vorhergehenden Ansprüche, wobei der Temperatursensor ein Thermistor ist.

9. Batteriebaugruppe nach Anspruch 8, wobei der Thermistor ein NTC-Thermistor ist.

10. Batteriebaugruppe nach einem der vorhergehenden Ansprüche, ferner umfassend eine mit dem PSM verbundene Stromversorgung, wobei der PSM eine Spannung und einen Strom der Stromversorgung in eine Spannung und einen Strom umwandelt, mit denen die Batterie geladen wird.

11. Verfahren zum Laden einer Batterie, umfassend:
Bereitstellen einer Batteriebaugruppe nach einem der vorhergehenden Ansprüche;
Verbinden einer Stromversorgung mit dem PSM (32); und
Verbinden des PSM (32) mit der Batterie über das Batteriekabel (12) ;
wobei der PSM (32) eine Spannung, mit der die Batterie geladen wird, basierend auf der durch den Temperatursensor (26) erfassten Temperatur steuert.

12. Batteriekabel (12) zum Laden einer Batterie, umfassend einen ersten und einen zweiten Draht (20a, 20b), die jeweilige erste Anschlüsse (16a, 16b) zur Verbindung mit jeweiligen Anschlüssen einer Batterie und jeweilige zweite Anschlüsse (18a, 18b) zur Aufnahme von Leistung von einer Stromquelle aufweisen,
**dadurch gekennzeichnet, dass** sich ein Temperatursensor (26) in oder an einem der jeweiligen ersten Anschlüsse (16a, 16b) befindet.

13. Batteriekabel nach Anspruch 12, wobei der Temperatursensor ein Thermistor ist.

14. Batteriekabel nach Anspruch 13, wobei das Batteriekabel eine Thermistorbaugruppe beinhaltet, die den Thermistor und den ersten und den zweiten Draht beinhaltet, die sich von dem Thermistor zu einem Anschlussblock erstrecken.

15. Batteriekabel nach Anspruch 12, 13 oder 14, wobei der eine der jeweiligen Anschlüsse ein Standard-Schnelltrenn(SQD)-Anschluss ist.

## Revendications

1. Assemblage de batterie comprenant :
une batterie ;
un gestionnaire d'alimentation (PSM) (32) pour commander la charge de la batterie ; et
un câble de batterie (12) comprenant des premier et second fils (20a, 20b) ayant des premières bornes respectives (16a, 16b) pour la connexion à des bornes respectives de la batterie et des secondes bornes respectives (18a, 18b) pour la connexion au PSM (32), le câble de batterie (12) ayant un capteur de température (26) situé dans ou sur l'une des premières bornes respectives (16a, 16b) ;
dans lequel le PSM (32) est connecté au capteur de température (26) et configuré pour commander la charge de la batterie sur la base de la température détectée par le capteur de température (26) .

2. Assemblage de batterie selon la revendication 1, dans lequel le PSM est configuré pour commander la tension à laquelle la batterie est chargée sur la base de la température détectée par le capteur de température.

3. Assemblage de batterie selon la revendication 2, dans lequel le PSM est configuré pour augmenter la tension à laquelle la batterie est chargée si la température détectée par le capteur de température est inférieure à un seuil prédéterminé.

4. Assemblage de batterie selon la revendication 2 ou 3, dans lequel le PSM est configuré pour diminuer la tension à laquelle la batterie est chargée si la température détectée par le capteur de température est supérieure à un seuil prédéterminé.

5. Assemblage de batterie selon une quelconque revendication précédente, dans lequel ladite une des premières bornes respectives est connectée à une borne négative de la batterie.

6. Assemblage de batterie selon une quelconque revendication précédente, dans lequel l'une des premières bornes respectives est une borne à déconnexion rapide standard (SQD).

7. Assemblage de batterie selon la revendication 6, dans lequel le capteur de température est situé dans une partie recourbée de la borne SQD.

8. Assemblage de batterie selon une quelconque revendication précédente, dans lequel le capteur de température est une thermistance.

9. Assemblage de batterie selon la revendication 8, dans lequel la thermistance est une thermistance NTC.

10. Assemblage de batterie selon une quelconque revendication précédente, comprenant en outre une alimentation connectée au PSM, dans lequel le PSM convertit une tension et un courant de l'alimentation en une tension et un courant auxquels la batterie est chargée.

11. Procédé de charge d'une batterie comprenant :
la fourniture d'un assemblage de batterie selon une quelconque revendication précédente ;
la connexion d'une alimentation électrique au PSM (32) ; et
la connexion du PSM (32) à la batterie avec le câble de batterie (12) ;
dans lequel le PSM (32) commande une tension à laquelle la batterie est chargée sur la base de la température détectée par le capteur de température (26).

12. Câble de batterie (12) destiné à la charge d'une batterie, comprenant des premier et second fils (20a, 20b) ayant des premières bornes respectives (16a, 16b) pour une connexion à des bornes respectives d'une batterie et des secondes bornes respectives (18a, 18b) pour recevoir de l'énergie d'une source d'alimentation,
**caractérisé en ce qu'**un capteur de température (26) est situé dans ou sur l'une des premières bornes respectives (16a, 16b).

13. Câble de batterie selon la revendication 12, dans lequel le capteur de température est une thermistance.

14. Câble de batterie selon la revendication 13, dans lequel le câble de batterie comporte un ensemble thermistance qui comporte la thermistance et des premier et second fils s'étendant depuis la thermistance jusqu'à un bloc connecteur.

15. Câble de batterie selon la revendication 12, 13 ou 14, dans lequel l'une des bornes respectives est une borne à déconnexion rapide standard (SQD).
